(19) Europäisches Patentamt
European Patent Office
Office européen des brevets

(11) EP 3 778 282 A1

(12) EUROPEAN PATENT APPLICATION
published in accordance with Art. 153(4) EPC

(43) Date of publication:
17.02.2021 Bulletin 2021/07

(51) Int Cl.:
B60K 7/00 (2006.01)          B60B 7/04 (2006.01)
B62K 17/00 (2006.01)         B62M 7/12 (2006.01)
H02K 5/04 (2006.01)          A63C 17/12 (2006.01)

(21) Application number: 19784342.8

(22) Date of filing: 27.03.2019

(86) International application number:
PCT/JP2019/013202

(87) International publication number:
WO 2019/198506 (17.10.2019 Gazette 2019/42)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.04.2018 JP 2018075226

(71) Applicant: Sony Corporation
108-0075 Tokyo (JP)

(72) Inventor: TAKAMATSU, Takashi
Tokyo 108-0075 (JP)

(74) Representative: Witte, Weller & Partner
Patentanwälte mbB
Postfach 10 54 62
70047 Stuttgart (DE)

(54) DRIVING DEVICE AND MOVING OBJECT

(57) A drive device according to an embodiment of the present technology includes a generation unit; a wheel unit; and a cover unit. The generation unit generates a rotational force. The generated rotational force is transmitted to the wheel unit, and the wheel unit rotates about a predetermined axis. The cover unit includes a base portion connected to the wheel unit, and a rib portion that is formed of a material different from that of the base portion and reinforces the base portion, and forms a space that houses the generation unit.

FIG.4

## Description

Technical Field

The present technology relates to a drive device and a moving object that are applicable to rotation control of drive wheels, and the like.

Background Art

In Patent Literature1, a wheel for a vehicle in which a metal and a fiber reinforced resin are combined is described. The wheel for a vehicular includes a metallic wheel base in which a rim portion to which a tire is mounted and a wheel fixing portion to be attached to an axle are connected to each other by a spoke body and a disc reinforcing member formed of a fiber reinforced resin. The disc reinforcing member is adhered to the wheel base with an adhesive so as to cover the spoke body. As a result, it is possible to reduce the weight of the entire wheel for a vehicle while maintaining the mechanical strength properties (paragraphs [0010], [0014], [0015], and [0020] of the specification, Fig. 1, and the like of Patent Literature 1).

Citation List

Patent Literature

Patent Literature 1: Japanese Patent Application Laid-open No. 2016-37061

Disclosure of Invention

Technical Problem

As described above, a technology of reducing the weight of the entire wheel while maintaining the machine strength and the like has been developed. In recent years, there has been an increasing demand for an in-wheel motor or the like including a drive mechanism inside the wheel, and there is a demand for a technology that realizes a lightweight and highly reliable drive device that can be applied to rotation control of drive wheels, and the like.

In view of the circumstances as described above, it is an object of the present technology to provide a drive device and a moving object that are lightweight and highly reliable.

Solution to Problem

In order to achieve the above-mentioned object, a drive device according to an embodiment of the present technology includes: a generation unit; a wheel unit; and a cover unit.

The generation unit generates a rotational force.

The wheel unit rotates about a predetermined axis, the generated rotational force being transmitted to the wheel unit.

The cover unit includes a base portion connected to the wheel unit, and a rib portion that is formed of a material different from that of the base portion and reinforces the base portion, and forms a space that houses the generation unit.

In this drive device, the rotational force from the generation unit is transmitted to cause the wheel unit to rotate. The base portion of the cover unit is connected to the wheel unit to form a space that houses the generation unit. The base portion is reinforced by the rib portion formed of a material different from that of the base portion. As a result, for example, it is possible to reduce the thickness of the base portion while reinforcing the base portion, and realize a drive device that are lightweight and highly reliable.

The base portion may rotatably support the wheel unit relative to the generation unit.

As a result, for example, it is possible to stably support the wheel unit, and cause the wheel unit can to appropriately rotate. As a result, it is possible to improve the reliability of the device.

The cover unit may include a pair of the base portions connected to one side and the other side of the wheel unit with the generation unit sandwiched therebetween along the predetermined axis.

As a result, for example, it is possible to sufficiently suppress deformation and the like of the wheel unit, and sufficiently improve the reliability of the device.

The generation unit may generate a rotational force about the predetermined axis.

As a result, it is possible to cause the wheel unit to rotate by the rotational force about the predetermined axis, and realize ma stable rotational operation and the like.

The rib portion may be formed of a material having a longitudinal elastic modulus higher than that of the material of the base portion.

As a result, for example, it is possible to reduce the thickness of the base portion while maintaining the mechanical strength. As a result, it is possible to exhibit high heat dissipation performance while maintaining the lightweight, and greatly improve the reliability of the device.

The rib portion may be formed of a material having a specific gravity lower than that of the material of the base portion.

As a result, it is possible to sufficiently reduce the weight of the device.

The base portion may be formed of a metal material. In this case, the rib portion may be formed of a fiber reinforced material.

As a result, it is possible to realize high heat dissipation performance and high mechanical strength, and greatly improve the reliability of the device.

The base portion may have a disposition surface perpendicular to the predetermined axis, the rib portion being disposed on the disposition surface.

As a result, for example, it is possible to reinforce the strength against a load, a twist, and the like from the wheel unit. As a result, it is possible to sufficiently improve the mechanical strength.

The rib portion may be disposed on the disposition surface along a radial direction centered on the predetermined axis.

As a result, for example, it is possible to relieve stresses due to loads applied to the base portion. As a result, it is possible to realize a drive device having a high durability against loads.

The rib portion may be disposed radially about the predetermined axis.

As a result, for example, it is possible to sufficiently relieve stresses due to loads applied to the base portion.

The rib portion may be disposed on the disposition surface along a circumferential direction centered on the predetermined axis.

As a result, for example, it is possible to relieve stresses due to a twist applied to the base portion. As a result, it is possible to realize a drive device having a high durability against a curve operation and the like.

The rib portion may be concentrically disposed about the predetermined axis.

As a result, for example, it is possible to sufficiently relieve stresses due to a twist and the like applied to the base portion.

The cover unit may be configured with reference to a shape and a material of a reference member that is capable of rotatably supporting the wheel unit relative to the generation unit without using reinforcement by the rib portion, the reference member having predetermined heat dissipation characteristics.

By using the reference member as a reference, it is possible to properly form the cover unit. As a result, it is possible to easily form a highly reliable and lightweight housing cover and the like.

A thickness of the base portion may be set smaller than a thickness of the reference member.

As a result, it is possible to reduce the weight of the device as well as sufficiently improve the heat dissipation characteristics. As a result, it is possible to sufficiently suppress breakage and the like of the device due to heat generation of the generation unit.

The cover unit may be configured to satisfy the following relationship:

$$t/S \leq t0/S0$$

where t represents a thickness of the base portion, S represents an exposed area of the base portion to the generation unit, t0 represents a thickness of the reference member, and S0 represents an exposed area of the reference member to the generation unit.

As a result, for example, it is possible to sufficiently improve the heat dissipation characteristics. As a result, it is possible to realize a lightweight drive device exhibiting excellent heat dissipation characteristics.

The cover unit may be configured to satisfy the relationship:

$$Ec \times Jc \geq E0 \times J0$$

where Ec represents a longitudinal elastic modulus of a composite member of the base portion and the rib portion, Jc represents a second moment of cross section of the composite member, E0 represents a longitudinal elastic modulus of the reference member, and J0 represents a second moment of cross section of the reference member.

As a result, for example, it is possible to sufficiently improve the mechanical strength. As a result, it is possible to realize a lightweight drive device having high mechanical strength.

The base portion may have a flat plate shape that is perpendicular to the predetermined axis and has an inner surface and an outer surface, the inner surface facing the generation unit, the outer surface being opposite to the inner surface. In this case, the rib portion may be disposed on at least one of the inner surface or the outer surface.

As a result, it is possible to easily form the rib portion and easily reinforce the base portion.

The base portion may include a first flat plate portion perpendicular to the predetermined axis and a second flat plate portion that comes into contact with the first flat plate portion so as to cover the first flat plate portion. In this case, the rib portion may be disposed between the first flat plate portion and the second flat plate portion.

As a result, it is possible to increase the area for transmitting heat generation or the like, and sufficiently improve the heat dissipation characteristics.

The rib portion may be configured by either adhesion to the base portion or injection molding.

For example, it is possible to easily reinforce the base portion by using adhesion or injection molding. As a result, it is possible to easily realize a lightweight and highly reliable drive device.

A moving object according to an embodiment of the present technology includes: the generation unit, the wheel unit, the cover unit, and a control unit.

The control unit controls the rotational force generated by the generation unit.

Advantageous Effects of Invention

As described above, in accordance with the present technology, it is possible to realize a drive device and a moving object that are lightweight and highly reliable. Note that the effect described here is not necessarily limitative, and any of the effects described in the present disclosure may be provided.

Brief Description of Drawings

[Fig. 1] Fig. 1 is a schematic diagram showing a configuration example of an electric kick skater according to an embodiment of the present technology.

[Fig. 2] Fig. 2 is a perspective view showing an appearance example of an in-wheel motor drive device.

[Fig. 3] Fig. 3 is a cross-sectional view showing a configuration example of the inside of an in-wheel motor drive device.

[Fig. 4] Fig. 4 is a perspective view showing a configuration example of a first cover.

[Fig. 5] Fig. 5 is a perspective view showing another configuration example of the first cover.

[Fig. 6] Fig. 6 is a schematic diagram showing an example of a hybrid structure.

[Fig. 7] Fig. 7 is a schematic diagram showing a cross-sectional structure of a cover and a reference member.

[Fig. 8] Fig. 8 is a schematic diagram showing the direction of an external force applied to the cover.

[Fig. 9] Fig. 9 is a schematic diagram showing an example of a hybrid structure according to another embodiment.

Mode(s) for Carrying Out the Invention

An embodiment according to the present technology will now be described below with reference to the drawings.

[Configuration of electric kick skater]

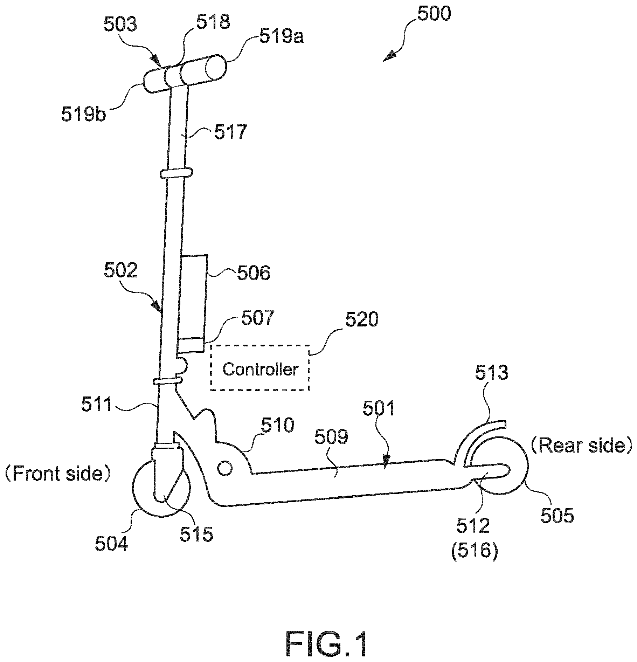

Fig. 1 is a schematic diagram showing a configuration example of an electric kick skater according to an embodiment of the present technology (hereinafter, referred to simply as the kick skater). A kick skater 500 corresponds to an embodiment of the moving object according to the present technology.

The kick skater 500 includes a board portion 501, a handle support portion 502, a handle portion 503, a front wheel 504, a rear wheel 505, a battery 506, and a control box 507. As shown in Fig. 1, the side on which the handle portion 503 is provided is the front side of the kick skater 500, and the opposite side thereof is the rear side.

The board portion 501 includes a board 509, a folding mechanism 510, a front wheel support portion 511, a rear wheel support portion 512, and a foot brake 513. The board 509 is a portion on which a user puts one foot or both feet and has a substantially plate shape extending in the front-rear direction.

The folding mechanism 510 is coupled to the front end of the board 509. The front wheel support portion 511 is coupled to the side of the folding mechanism 510 opposite to the side that is coupled to the board 509. The front wheel support portion unit 511 includes a hollow frame that extends in the up-and-down direction.

The folding mechanism 510 is configured to be capable of folding the kick skater 500. Specifically, the folding mechanism 510 is configured to be capable of causing the board 509 to relatively rotate toward the front wheel support portion 511 so that the extension direction of the board 509 is equal to the extension direction of the front wheel support portion 511. The specific configuration of the folding mechanism 510 is not limited and may be arbitrarily designed.

The lower end of the front wheel support portion 511 is provided with two support members 515 facing each other with a space therebetween (in the figure, only one of the support members 515 is shown). The front wheel 504 is rotatably supported by being sandwiched between the two support members 515.

The rear wheel support portion 512 is coupled to the rear end of the board 509. The rear wheel support portion 512 includes two support members 516 facing each other with a space therebetween (in the figure, only one of the support members 516 is shown). The rear wheel 505 is rotatably supported by being sandwiched between the two support members 516.

The foot brake 513 is disposed at the rear end of the board 509 so as to cover the upper side of the rear wheel 505. A user can apply braking by stepping on the foot brake 513 with his/her foot and pressing it against the rear wheel 505. Note that the foot brake 513 may have a mudguard function.

The handle support portion 502 includes a hollowed frame extending in the up-and-down direction, and is inserted into and fixed to the front wheel support portion 511.

The handle portion 503 includes a frame 517 that has a substantially T-shape and extends in the up-and-down direction and a handle 518 that extends in the right and left direction as viewed from the user. The frame 517 is inserted into and fixed to the handle support portion 502. At this time, the height, angle, and the like of the handle 518 can be adjusted, and the handle portion 503 may be fixed after the adjustment is completed.

The handle 518 includes a left grip 519a held by a left hand and a right grip 519b held by a right hand. In this embodiment, the right grip 519b functions as an accelerator grip. The user can perform an acceleration operation by causing the right grip 519b to rotate.

The battery 506 and the control box 507 are attached to the handle support portion 502. The battery 506 is configured attachably/detachably to the control box 507. The battery 506 is mounted when the kick skater 500 is used, and the battery 506 is removed when the kick skater 500 is charged or the like. Note that the kick skater 500 can be advanced by kicking the ground with a foot or the like without attaching the battery 506.

Within the control box 507, a controller 520 schematically illustrated by a block of broken lines, various circuits such as a power supply circuit and a drive circuit (illustration omitted), and the like are provided. The controller 520 includes a CPU, a ROM, and the like, and controls the rotation drive of the front wheel 504 that functions as a drive wheel. Specifically, the controller 520 controls the power supply to the in-wheel motor described below. As a result, it is possible to control the generation of a rotational force by the in-wheel motor.

The controller 520 rotationally drives the front wheel 504 in accordance with an acceleration operation of causing the right grip 519b to rotate. As a result, it is possible to cause kick skater 500 to move forward. The specific configuration of the controller 520 is not limited and may be arbitrarily designed. In this embodiment, the controller 520 functions as a control unit.

The configuration of the kick skater 500 shown in Fig. 1 is merely one embodiment, and another arbitrary configuration may be adopted for the whole shape and the respective portions. For example, a position where the battery 506 or the control box 507 is attached, a configuration for inputting an acceleration operation, or the like may be arbitrarily designed. The present technology is applicable to an arbitrary kick skater in which the front wheel and/or the rear wheel are used as driven wheels.

[In-wheel motor drive device]

In this embodiment, an in-wheel motor drive device is used for the front wheel 504 that is a driving wheel. The in-wheel motor drive device is a device in which a motor is disposed inside or in the vicinity of a wheel or a hub supporting a tire, and the wheel or the hub is directly rotationally driven. The in-wheel motor drive device can also be referred to as an in-wheel motor type drive device.

In the present disclosure, a motor included in an in-wheel motor drive device is described as an in-wheel motor. Note that in some cases, the in-wheel motor drive device itself is called an in-wheel motor for use.

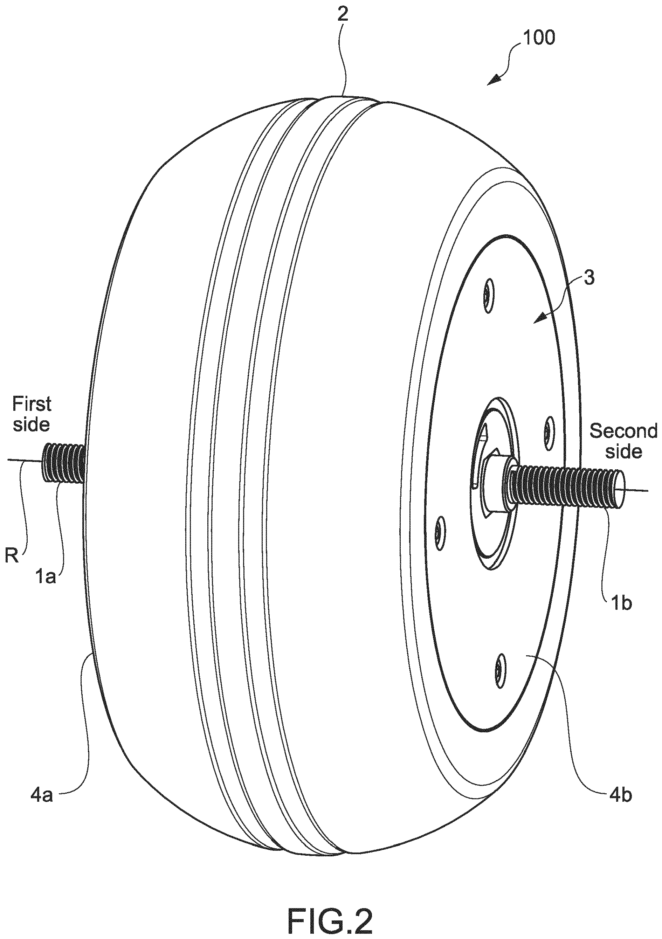

Fig. 2 is a perspective view showing an appearance example of an in-wheel motor drive device 100. As shown in Fig. 2, the in-wheel motor drive device 100 includes fixed shafts 1a and 1b, a tire 2, and a housing 3.

The fixed shafts 1a and 1b are disposed so that their extending directions are equal to each other and they are aligned in the same line with each other. In other words, the fixed shafts 1a and 1b are disposed such that the extension line extending the fixed shaft 1a and the extension line extending the fixed shaft 1b overlap on the same straight line.

As shown in Fig. 2, an imaginary straight line on which the fixed shafts 1a and 1b are disposed is defined as an axis R. The in-wheel motor drive device 100 is rotationally driven with the axis R as a rotation center. In this embodiment, the axis R corresponds to the predetermined axis.

Hereinafter, the axis R will be described as the rotation center axis R. Further, description will be made with one side of the in-wheel motor drive device 100 being referred to as a first side and the side opposite to the first side being referred to as a second side, in the axial direction of the rotation center axis R.

Note that the fixed shafts 1a and 1b are connected to and fixed to a motor housing 14 included in a motor (in-wheel motor) 10 to be described below.

The tire 2 is disposed radially perpendicular to the rotation center axis R about the rotation center axis R. The tire 2 is supported by a substantially cylindrical wheel 40 described below. The surface shape, material, and the like of the tire 2 are not limited, and may be arbitrarily designed.

The housing 3 houses s a rotation mechanism (the motor 10, a gear mechanism 30, and the like) described below) for performing rotation driving. In this embodiment, the housing 3 is configured to house the rotation mechanism in the space enclosed by the tire 2 (the wheel 40).

The housing 3 incudes a substantially circular plane portions 4a and 4b perpendicular to the rotation center axis R. The plane portions 4a and 4b are respectively disposed on the first side and the second side towards the outside of the in-wheel motor drive device 100. The plane portions 4a and 4b are configured rotatably relative to the fixed shafts 1a and 1b. Note that in the perspective view shown in Fig. 2, the plane portion 4b (second side) is visible, and the plane portion 4a (first side) is not visible.

The two fixed shafts 1a and 1b are fixed to the two support members 515 provided at the lower end of the front wheel support portion 511 shown in Fig. 1. When electric power is supplied to the in-wheel motor drive device 100, the housing 3 and the tire 2 rotate integrally with each other about the rotation center axis R. This makes it possible for the front wheel 504 to function as a drive wheel.

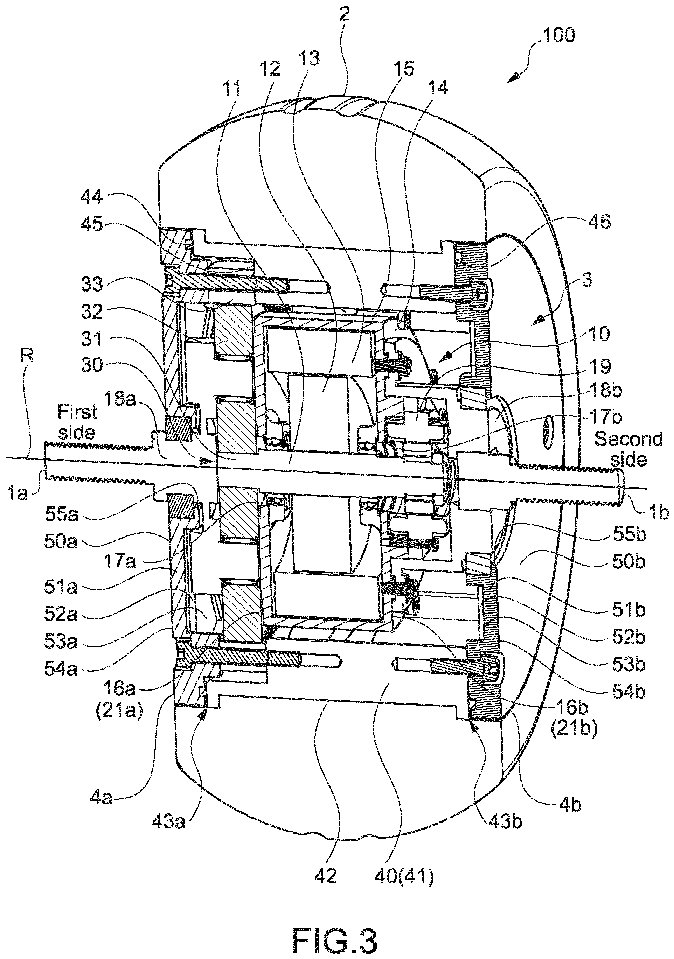

Fig. 3 is a cross-sectional view showing a configuration example of the inside of the in-wheel motor drive device 100. Fig. 3 is a cross-sectional view of the in-wheel motor drive device 100 shown in Fig. 2 taken along a plane including the rotation center axis R.

As shown in Fig. 3, the in-wheel motor drive device 100 further includes the motor 10, the gear mechanism 30, a wheel 40, a first cover 50a, and a second cover 50b.

The motor 10 is an inner rotor type motor and includes a rotation shaft 11, a rotor 12, a stator 13, and the motor housing 14.

The rotation shaft 11 is rotatably disposed on the rotation center axis R. The rotor 12 has a substantially cylindrical shape with the rotation center axis R as the center, and a magnet is embedded in the side surface portion facing the stator 13. The rotation shaft 11 is fixed to the center of the rotor 12, and the rotor 12 and the rotation shaft 11 are rotatable integrally.

The stator 13 has a substantially cylindrical shape centered on the rotation center axis R, and is configured to cover the side surface portion of the rotor 12. A coil is wound around the stator 13 and functions as a motor coil.

The motor housing 14 houses the rotation shaft 11, the rotor 12, and the stator 13 therein. The motor housing 14 has a substantially cylindrical shape centered on the rotation center axis R, and has a cylindrical side surface 15 and two substantially circular plane portions 16a and 16b.

A through hole 17a is formed in the center of the plane portion 16a located on the first side, and is inserted such that the end of the rotation shaft 11 on the first side protrudes from the through hole 17a to the first side. The rotation shaft 11 is rotatably connected to the motor housing 14 via a bearing or the like.

Further, the central part of the plane portion 16a is provided with a first protruding portion 18a protruding to the first side. The first protruding portion 18a is connected and fixed to the fixed shaft 1a. Further, the first protruding portion 18a has also a function of holding a planetary gear 32 of the gear mechanism 30, which will be described below.

A through hole 17b is formed in a region including the center of the plane portion 16b located on the second side. Further, the plane portion 16b is provided with a second protruding portion 18b protruding to the second side so as to cover the through hole 17b. The second protruding portion 18b is connected and fixed to the fixed shaft 1b.

Further, a shaft support portion 19 is configured inside the second protruding portion 18b. The end of the rotation shaft 11 on the second side is rotatably connected to the shaft support portion 19 via a bearing or the like. Note that in the schematic diagram of Fig. 3, the rotation shaft 11 is rotatably connected to the through hole 17b of the plane portion 16b.

The stator 13 (motor coil) of the motor 10 is fixed to the inside of the side surface 15 of the motor housing 14. When a current is supplied to the motor coil, the rotor 12 and the rotation shaft 11 rotate integrally with respect to the motor housing 14 connected to the fixed shafts 1a and 1b. As a result, the motor 10 generates a rotational force around the rotation center axis R. In this embodiment, the motor 10 corresponds to the generation unit that generates a rotational force.

Note that the motor housing 14 is formed of a plurality of members. In this embodiment, the motor housing 14 is configured by a first housing member 21a including the plane portion 16a on the first side and a second housing member 21b including the plane portion 16b on the second side.

The method of connecting the first and second housing members 21a and 21b, the method of connecting the first housing member 21a and the first protruding portion 18a, and the method of connecting the second housing member 21b and the second protruding portion 18b are not limited. An arbitrary method such as fastening via a vis, screw, or the like, and adhesion using an adhesive or the like may be adopted.

By forming the motor housing 14 of a plurality of members, it is possible to improve the assemblability of the in-wheel motor drive device 100. It goes without saying that other connecting members or the like may be disposed between the first and second housing members 21a and 21b.

The gear mechanism 30 decelerates and transmits the rotational force generated by the motor 10 with the rotation center axis R as a rotation center. In this embodiment, a reduction mechanism using a planetary gear mechanism is configured as the gear mechanism 30. The gear mechanism 30 includes a sun gear 31, a plurality of planetary gears 32, and an internal gear 33.

The sun gear 31 is formed at the end of the rotation shaft 11 on the first side. The sun gear 31 may be integrally formed with the rotation shaft 11 or may be configured to be connectable to the end of the rotation shaft 11.

The plurality of planetary gears 32 is disposed at substantially equal intervals about the sun gear 31. The planetary gear 32 is inserted into a rotation shaft provided on the first protruding portion 18a, and is rotatably held between the plane portion 16a and the first protruding portion 18a of the motor housing 14. In the example shown in Fig. 3, the cross section of two planetary gears 32 is schematically illustrated. The number of the planetary gears 32, and the like are not limited.

The internal gear 33 has a substantially cylindrical shape with the rotation center axis R as the center, and is disposed so as to surround the plurality of planetary gears 32. The internal gear 33 includes gear teeth formed on the inside (on the side of the rotation center axis R) of the cylindrical shape.

The sun gear 31 is engaged with the plurality of planetary gears 32. Further, the plurality of planetary gears 32 is engaged with the internal gear 33 disposed thereabout. As the rotation shaft 11 of the motor 10 rotates, a rotational force is generated and the sun gear 31 rotates. The rotational force is decelerated and transmitted by the planetary gear mechanism including the sun gear 31, the plurality of planetary gears 32, and the internal gear 33. Then, the decelerated rotational force is output by the internal gear 33.

The wheel 40 includes a substantially cylindrical main body portion 41 centered on the rotation center axis R and a tire support portion 42 supporting the tire 2 provided on the side of the outer periphery of the main body portion 41. The main body portion 41 includes a first side surface portion 43a disposed on the first side and a second side surface portion 43b disposed on the second side.

The outer and inner sides of the first side surface portion 43a are respectively provided with an outer connection surface 44 and an inner connection surface 45 perpendicular to the rotation center axis R. As shown in Fig. 3, the inner connection surface 45 is a bottom surface having a stepped shape, and is disposed at a position closer to the second side than the outer connection surface 44. The second side surface portion 43b is provided with a connection surface 46 perpendicular to the rotation center axis R.

The internal gear 33 included in the gear mechanism 30 is fixed to the inner connection surface 45. In the example shown in Fig. 3, the internal gear 33 is fixed to the main body portion 41 of the wheel 40 by screwing, together with the first cover 50a described below. Alternatively, the internal gear 33 may be fixed to the main body portion 41 by bonding, welding, or the like. Alternatively, the internal gear 33 may be formed on the main body portion 41.

By fixing the internal gear 33 to the wheel 40 (the main body portion 41), a rotational force generated by the motor 10 is decelerated by the gear mechanism 30 and transmitted to the wheel 40. Thus, as the internal gear 33 rotates, the wheel 40 also rotates integrally with the internal gear 33. As described above, the rotational force generated by the motor 10 is transmitted to the wheel 40, and the wheel 40 rotates about the rotation center axis R. In this embodiment, the wheel 40 corresponds to the wheel unit.

The tire support portion 42 includes a groove for supporting the tire 2 and functions as a rim. As shown in Fig. 3, the tire 2 is connected to the tire support portion 42 of the wheel 40 and rotates integrally with the wheel 40. For example, when the tire 2 rotates with respect to the road surface or the like, the kick skater 500 can be driven.

The first and second covers 50a and 50b are each a member constituting the housing 3, and function as a cover housing the motor 10 and the gear mechanism 30. In this embodiment, the first cover 50a and the second cover 50b correspond to the cover unit.

The first cover 50a includes a substantially disc-shaped cover member 51a and a rib portion 52a provided on the cover member 51a. The cover member 51a has an inner surface 53a that is perpendicular to the rotation center axis R and faces the motor 10 and an outer surface 54a opposed to the inner surface 53a. The outer surface 54a of the cover member 51a corresponds to the plane portion 4a of the housing 3 shown in Fig. 2.

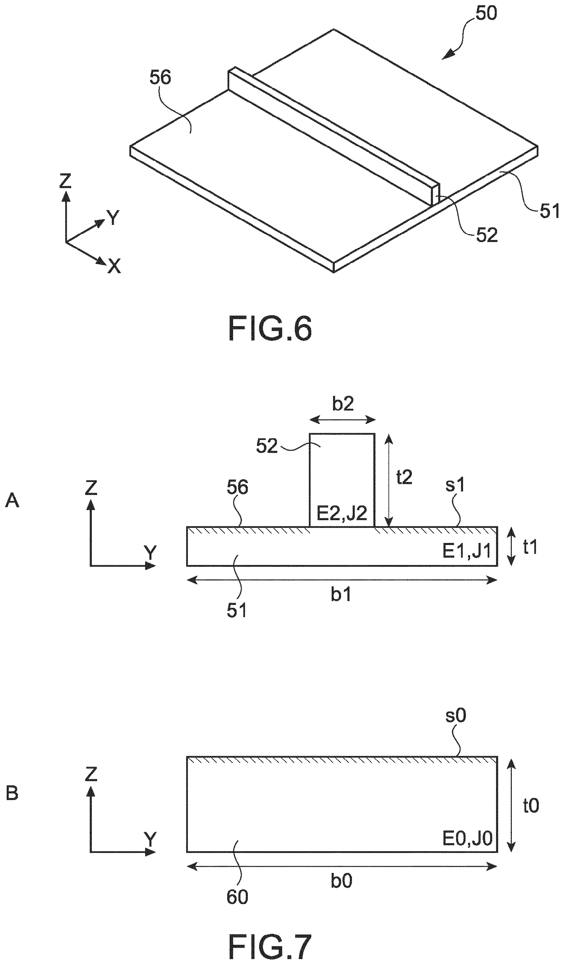

The rib portion 52a is disposed on the inner surface 53a of the cover member 51a. The rib portion 52a is formed of a material different from that of the cover member 51a, and reinforces the cover member 51a. Here, the reinforcement of the cover member 51a means, for example, reinforcement of the mechanical strength of the cover member 51a. Thus, the first cover 50a becomes a hybrid structure material with a reinforcing structure by the rib portion 52a. This point will be described in detail below with reference to Fig. 6 and the like.

The cover member 51a is connected to the first side surface portion 43a of the main body portion 41 of the wheel 40 with the side of the inner surface 53a facing the motor 10. The inner surface 53a is disposed to come into contact with the outer connection surface 44. The internal gear 33 is disposed between the inner connection surface 45 and the cover member 51a. That is, the cover member 51a is connected to the wheel 40 with the internal gear 33 sandwiched therebetween. The cover member 51a and the internal gear 33 are fixed to the main body portion 41 of the wheel 40 by screwing using threaded holes provided in the inner connection surface 45.

A through hole 55a is formed at the center of the cover member 51a. The first protruding portion 18a to which the fixed shaft 1a is connected is disposed in the through hole 55a. A bearing or the like is disposed between the first protruding portion 18a and the edge of the through hole 55a, and the cover member 51a is configured to be rotatable relative to the first protruding portion 18a (the motor 10).

The second cover 50b includes a substantially disc-shaped cover member 51b and a rib portion 52b provided on the cover member 51b. The cover member 51b has an inner surface 53b that is perpendicular to the rotation center axis R and faces the motor 10, and an outer surface 54b opposed to the inner surface 53b. The outer surface 54b of the cover member 51b corresponds to the plane portion 4b of the housing 3 shown in Fig. 2.

The rib portion 52b is disposed on the inner surface 53b of the cover member 51b. The rib portion 52b is formed of a material different from that of the cover member 51b and reinforces the cover member 51b. Thus, the second cover 50b becomes a hybrid structure material with a reinforcing structure by the rib portion 52b.

The cover member 51b is connected to the second side surface portion 43b of the main body portion 41 of the wheel 40 with the side of the inner surface 53b facing the motor 10. The cover member 51b is disposed to come in contact with the connection surface 46, and is fixed to the main body portion 41 of the wheel 40 by screwing using a threaded hole provided in the connection surface 46.

Further, a through hole 55b is formed at the center of the cover member 51b. The second protruding portion 18b to which the fixed shaft 1b is connected is disposed in the through hole 55b. A bearing or the like is disposed between the second protruding portion 18b and the edge of the through hole 55b, and the cover member 51b is configured to be rotatable relative to the second protruding portion 18b (the motor 10).

As described above, the cover member 51a and the cover member 51b are respectively connected to the first side and the second side of the wheel 40 with the motor 10 sandwiched therebetween along the rotation center axis R. As a result, a space that houses the motor 10 is formed between the first cover 50a (the cover member 51a) and the second cover 50b (the cover member 51b).

In this embodiment, the cover member 51a and the cover member 51b correspond to the base portion. Further, a pair of base portions include the cover member 51a and the cover member 51b. Further, the first side of the wheel 40 corresponds to one side of the wheel unit and the second side of the wheel 40 corresponds to the other side of the wheel unit.

The cover member 51a and the cover member 51b are fixed to the wheel 40 (the main body portion 41) and are rotatably connected to the motor 10. That is, the cover member 51a and the cover member 51b rotatably support the wheel 40 relative to the motor 10. Therefore, the cover (the first cover 50a and the second cover 50b) of the in-wheel motor drive device 100 function as a strength member for supporting the wheel 40 with respect to the motor 10 and the fixed shafts 1a and 1b.

Further, when the motor 10 is driven, heat generation occurs in the motor coil or the like. The heat generated by this motor 10 is radiated to the outside of the in-wheel motor drive device 100 through the first cover 50a and the second cover 50b. Therefore, each cover will function as a heat dissipating member for radiating heat of the space that houses the motor 10.

As described above, the first and second covers 50a and 50b are configured to function as not only covers for housing the motor 10 and the like but also strength members for supporting the wheel 40 and the like and heat dissipating members for radiating heat of the motor 10.

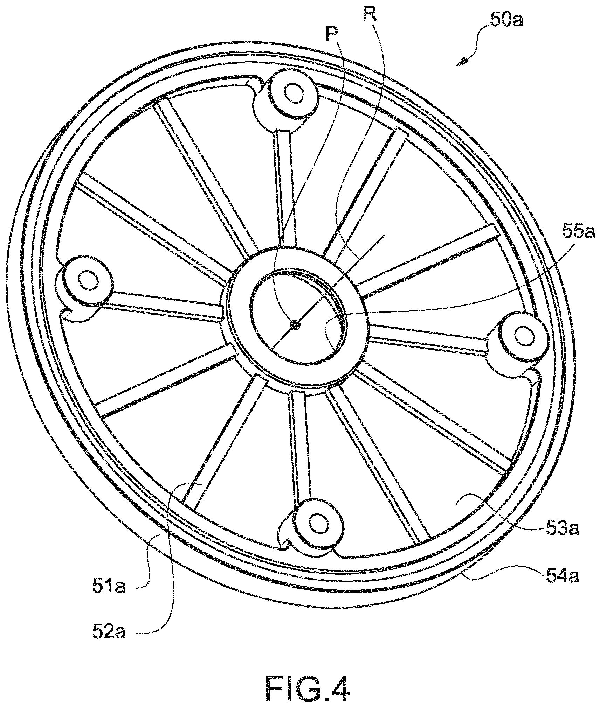

Fig. 4 is a perspective view showing a configuration example of the first cover 50a. Fig. 4 is a perspective view of the first cover 50a shown in Fig. 3, and the inner surface 53a is illustrated to be visible. Hereinafter, a specific structure of the cover will be described by exemplifying the first cover 50a.

Note that the content described for the first cover 50a is also applicable to the second cover 50b. That is, the description of the respective portions (e.g., the cover member 51a and the rib portion 52a) for the first cover 50a can be appropriately read as the description of the respective portions (e.g., the cover member 51b and the rib portion 52b) of the second cover 50b.

In the first cover 50a, the rib portion 52a is disposed along the inner surface 53a of the cover member 51a as described above. Therefore, in the case where the first cover 50a is mounted on the wheel 40, the rib portion 52a is disposed along the plane direction perpendicular to the rotation center axis R. In this embodiment, the inner surface 53a corresponds to the disposition surface perpendicular to the rotation center axis R, the rib portion being disposed on the disposition surface.

In the example shown in Fig. 4, the rib portion 52a is disposed on the inner surface 53a along the radial direction centered on the rotation center axis R. That is, the rib portion 52a is disposed along a direction from a center position P of the inner surface 53a (the center of the through hole 55a) toward the outer periphery of the inner surface 53a.

Further, the rib portion 52a is disposed radially about the rotation center axis R. Fig. 4 illustrates twelve rib portions 52a disposed radially around the through hole 55a with reference to the center position P of the inner surface 53a. The twelve rib portions 52a are disposed such that the extending directions of neighboring rib portions 52a intersect at 30°.

By disposing the rib portions 52 radially as described above, it is possible to sufficiently suppress the stress deformation or the like of the cover member 51 with respect to the force (load or the like) in the radial direction applied to the cover member 51a. As a result, it is possible to sufficiently improve the mechanical strength or the like of the entire cover in the radial direction, and increase the reliability of the device.

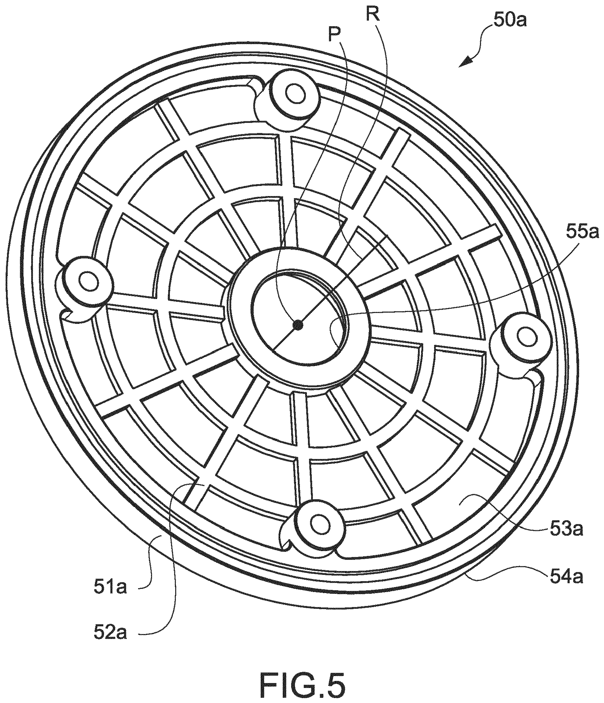

Fig. 5 is a perspective view showing another configuration example of the first cover 50a. In the example shown in Fig. 5, ring-shaped rib portions 52a are disposed in addition to the twelve radial rib portions 52a shown in Fig. 4. Both the radial rib portions 52a and the ring-shaped rib portions 52a are set to similar thicknesses.

As shown in Fig. 5, the ring-shaped rib portions 52a are disposed on the inner surface 53a along the circumference direction centered on the rotation center axis R. That is, the rib portion 52a is disposed along the circumference with reference to the center position P of the inner surface 53a (the center of the through hole 55a).

Further, the ring-shaped rib portions 52a are concentrically disposed about the rotation center axis R. In Fig. 5, circular rib portions 52a disposed along two large and small circles around the through hole 55a with reference to the center position P of the inner surface 53a are illustrated. As shown in Fig. 5, the circular rib portions 52a are disposed so as to join together the radial rib portions 52a adjacent to each other.

By disposing the rib portions 52a concentrically as described above, it is possible to sufficiently suppress the stress deformation of the cover member 51, and the like with respect to the twist or the like applied to the cover member 51a. This makes it possible to sufficiently avoid distortion or the like in the cover member 51, for example, and sufficiently improve the reliability of the device.

In the following, the hybrid structure used for the first and second covers 50a and 50b will be described.

Fig. 6 is a schematic diagram showing an example of the hybrid structure. Fig. 6 schematically illustrates an example of the hybrid structure for a cover 50 including the cover member 51 and the rib portion 52 formed of a material different from that of the cover member 51.

The hybrid structure (the cover member 51 + the rib portion 52) shown in Fig. 6 schematically represents the structure of the first cover 50a (the cover member 51a + the rib portion 52a) or the structure of the second cover 50b (the cover member 51b + the rib portion 52b) described with reference to Fig. 3 or the like.

In the hybrid structure shown in Fig. 6, a substantially rectangular parallelepiped-shaped the rib portion 52 extending in one direction along one surface (disposition surface 56) of a plate-shaped cover member 51 is disposed. The disposition surface 56 corresponds to the inner surface 53a of the cover member 51a or the inner surface 53b of the cover member 51b shown in Fig. 3 and the like.

In the following, the direction in which the rib portion 52 extends in the disposition surface 56 and the direction perpendicular thereto are defined as the X direction and the Y direction, and the direction perpendicular to the disposition surface 56 is defined as the Z direction. Therefore, the Z direction is a direction parallel to the rotation center axis R.

The reinforcing rib structure for disposing the rib portion 52 on the surface of the cover member 51 enables the cover member 51 to be easily reinforced. Further, in this structure, the entire strength can be easily improved by increasing the cross-sectional area of the rib portion 52 as will be described below. For example, in the hybrid structure shown in Fig. 6, the thickness (height) of the rib portion 52 can be easily adjusted.

For example, by increasing the height of the rib, it is possible to easily increase the strength of the cover 50 (see, for example, the formula (3) below). As a result, for example, it is possible to form the cover member 51 sufficiently thin, and sufficiently reduce the weight of the entire cover 50. As described above, it can be also said that the reinforcing rib structure shown in Fig. 6 is a structure suitable for weight reduction.

In this embodiment, the cover member 51 is formed of a metal material. The metal material is, for example, a material with excellent thermal conductivity properties compared to a non-metal material such as a plastic material. By using a metal material, heat or the like generated by the motor 10 can be efficiently dissipated.

Thermal resistance can be used as a parameter representing the thermal conductivity properties of the cover member 51 (metal material). The thermal resistance is a parameter representing the difficulty of transmission of temperature, and represented by, for example, a temperature difference caused when transmitting a predetermined amount of generated heat. Note that the thermal resistance is a value corresponding to the shape and material of the target member.

For example, the thermal resistance in the thickness direction of the cover member 51, i.e., the thermal resistance from the inside to the outside of the in-wheel motor drive device 100, is proportional to the thickness of the cover member 51 and inversely proportional to the exposed area of the cover member 51 to the heat source. Therefore, as the thickness of the cover member 51 is smaller and also the exposed area of the disposition surface 56 (the inner surface 53a or the inner surface 53b) to be exposed to the motor 10 is larger, the thermal resistance decreases and the heat dissipation performance is improved. The exposed area will be described in detail below.

As the metal material, for example, an aluminum material such as an aluminum alloy using aluminum (Al) is used. The use of an aluminum material makes it possible to form the cover member 51 that is lightweight and has low thermal resistance.

The type and the like of the metal material are not limited. For example, a magnesium alloy containing magnesium (Mg) as a main component may be used as the metal material. As a result, it is possible to sufficiently reduce the weight of the cover member 51. Also, stainless steel containing iron (Fe) as a main component, or the like may be used. As a result, it is possible to realize the cover member 51 with high mechanical strength. In addition, an arbitrary metal material capable of realizing desired strength, thermal resistance, or the like may be used for cover member 51.

As the rib portion 52, for example, a material having mechanical strength higher than that of the cover member 51 is used. In this embodiment, the rib portion 52 is formed of a material having a longitudinal elastic modulus (Young's modulus) higher than that of the material of the cover member 51. For example, the higher the longitudinal elastic modulus, the smaller the amount of strain relative to the external force (stress) applied to the member.

Therefore, by reinforcing the cover member 51 by using the rib portion 52 having a high longitudinal elastic modulus, for example, it is possible to suppress the amount of strain of the entire cover 50 against an external force such as a load. In addition, by providing the rib portion 52 having a high longitudinal elastic modulus, it is possible to reduce the thickness of the cover member 51 while maintaining the mechanical strength of the entire cover 50 at a desired value, for example. As a result, it is possible to reduce the weight of the cover member 51 and reduce the weight of the device.

Further, the rib portion 52 is formed of a material having a specific gravity lower than that of the cover member 51. That is, a material having a small weight per unit volume than a material (metal material or the like) used for the cover member 51 is used for the rib portion 52. As a result, for example, it is possible to sufficiently suppress the weight of the entire the cover 50 as compared with the case where the rib or the like is formed of the same material as that of the cover member 51. As a result, it is possible to significantly reduce the weight of the device while maintaining the mechanical strength.

In this embodiment, the rib portion 52 is formed of a fiber reinforced material. Typically, for the rib portion 52, a carbon fiber reinforced material (CFRP: Carbon Fiber Reinforced Plastics) is used. Thus, the cover 50 becomes a CFRP metal hybrid structure material in which the metal material is reinforced with CFRP.

A CFRP is a material obtained by impregnating a carbon fiber with a resin material (base material) such as plastic. By using a CFRP, it is possible to realize the rib portion 52 that has high mechanical strength (longitudinal elastic modulus or the like) and is lightweight.

The rib portion 52 is formed by adhesion to the cover member 51. For example, a CFRP processed into a predetermined shape is bonded to the cover member 51 using an adhesive, an adhesive tape, or the like, so that the rib portion 52 is formed. The method is applicable to both thermoplastic CFRP and thermosetting CFRP. As a result, it is possible to easily fix the rib portion 52 to the cover member 51.

The rib portion 52 may be formed by injection molding (outsert molding) to the cover member 51. For example, a thermoplastic CFRP is injected directly into the cover member 51 (metal material) to form the rib portion 52. As a result, it is possible to accurately form the rib portion 52 without using an adhesive or the like.

Note that the material forming the rib portion 52, and the like are not limited. For example, instead of the carbon fiber, a fiber reinforced material using another fiber material such as a glass fiber may be used. Also, the rib portion 52 is not limited to the fiber reinforced material, and may be formed of an arbitrary material capable of reinforcing the cover member 51 to achieve desired strength, for example.

The shapes and materials of the respective members of the cover member 51 and the rib portion 52 are set on the basis of the shapes and materials of the reference member. Here, the reference member means, for example, a strength member that is formed of a single material (metal material or the like) and functions as a cover of the in-wheel motor drive device 100. Further, the reference member is also a heat dissipating member having a function of radiating heat of the motor 10. That is, the reference member is a member capable of rotatably supporting the wheel 40 with respect to the motor 10 without using reinforcement by the rib portion 52 and has predetermined heat dissipation characteristics.

Here, the predetermined heat dissipation characteristics mean, for example, characteristics of radiating heat of the motor 10 so that the temperature of the space in which the motor 10 is housed is maintained properly. The predetermined heat dissipation characteristics can be represented by, for example, using heat conductive performance or the like for transmitting the heat generated with the operation of the motor 10 from the space in the wheel 40 to the outside of the wheel 40. The heat dissipation characteristics of the reference member are appropriately set in accordance with, for example, the power consumed by the motor 10, the heat-resistant temperature of the motor coil (the stator 13), the size of the wheel 40, and the like.

Thus, it can be said that the reference member is a member having both the strength properties for rotatably supporting the wheel 40 and the heat dissipation characteristics to properly maintain the temperature in the wheel 40. The cover 50 (the cover member 51 and the rib portion 52) are formed with reference to the shape and material of the reference member.

As the reference member, for example, a member that is formed by using the same metal material as the cover member 51 and has substantially the same general shape as the cover member 51 is used. Note that the reference member is not provided with a reinforcing structure using the rib portion 52. In another viewpoint, it can be also said that the reference member is an initial member (initial material) designed as a cover without introducing a reinforcing structure by the rib portion 52.

Thus, the cover 50 is a hybrid structure material with the base metal (the cover member 51) reinforced by a CFRP (the rib portion 52), and the reference member is a structure material formed of only the base metal.

Fig. 7 is a schematic diagram showing a cross-sectional structure between the cover 50 and a reference member 60. Part A of Fig. 7 is a schematic diagram showing a cross section of the cover 50 in the YZ plane shown in Fig. 6. Part B of Fig. 7 is a schematic diagram showing a cross section of the reference member 60. In the cross section of the reference member 60 shown in Part B of Fig. 7, the cross section of the cover 50 shown in Part A of Fig. 7 and the dimension in the Y direction are similarly set.

In this embodiment, a thickness t1 of the cover member 51 is set smaller than a thickness t0 of the reference member 60. For example, as shown in Part A of Fig. 7 and Part B of Fig. 7, the cover member 51 is configured to be thinner than the reference member 60. Even in the case where the cover member 51 is thinned as described above, it is possible to realize strength similar to that of the reference member 60 by using the reinforcing structure by the rib portion 52. In addition, it is possible to reduce the thermal resistance and the like by reducing the thickness of the cover member 51. Hereinafter, a method of setting the shape and material of the cover 50 will be described.

In this embodiment, the shapes and materials of the cover member 51 and the rib portion 52 are set with reference to the heat radiation characteristics and the strength characteristics of the reference member 60.

As described above, the heat dissipation characteristic can be represented by using the thermal resistance of the member. Specifically, the heat resistance when transferring heat generated from the motor 10 that is a heat source to the outside of the device, i.e., the thermal resistance in the Z axis direction (thickness direction) is used.

The thermal resistance in the thickness direction of the cover 50 is proportional to the thickness t1 of the cover member 51 and inversely proportional to an exposed area s1 of the cover member 51 to the motor 10. Here, the exposed area s1 is, for example, the area obtained by subtracting the area of the region where the rib portion 52 is disposed from the area of the disposition surface 56 of the cover member 51. That is, the exposed area s1 is the area of the exposed surface of the metal material exposed to the motor 10. In Part A of Fig. 7, the portion corresponding to the exposed surface is schematically illustrated using a diagonal line.

In this embodiment, the thickness t1 of the cover member 51 corresponds to the thickness t of the base portion, and the exposed area s1 of the cover member 51 to the motor 10 corresponds to an exposed area S of base portion to the generation unit. Note that a CFRP is generally a material having thermal resistance higher than that of a metal material or the like. Therefore, the region in which the rib portion 52 formed of a CFRP is provided is a region in which heat is hardly conducted.

The thermal resistance in the thickness direction of the reference member 60 is proportional to the thickness t0 of the reference member 60 and inversely proportional to an exposed area s0 of the reference member 60 to the motor 10. Here, the exposed area s0 of the reference member 60 is the area of the metal material exposed to the motor 10 in the case where the reference member 60 is used to form the in-wheel motor drive device 100. The exposed area s0 of the reference member 60 is typically similar to the area of the disposition surface 56 of the cover member 51.

The cover 50 is configured to satisfy the relationship represented by the following formula where t1 represents the thickness of the cover member 51, s1 represents the exposed area of the cover member 51 to the motor 10, t0 represents the thickness of the reference member 60, and s0 represents the exposed area of the reference member 60 to the motor 10.

$$t1/s1 \leq t0/s0 \qquad (1)$$

The formula (1) is a conditional expression representing the relationship between the thermal resistance in the thickness direction of the cover 50 and the thermal resistance of the reference member 60 in the thickness direction. As shown in the formula (1), the thermal resistance of the cover 50 in the thickness direction is set to be equal to or less than the thermal resistance of the reference member 60 in the thickness direction. That is, the thickness t1 of the cover member 51 and the exposed area s1 are set so that the cover 50 exhibits heat radiation characteristics equal to or greater than those of the reference member 60.

Note that setting the exposed area s1 corresponds to setting the area of the rib portion 52 in the disposition surface 56 (lateral width b2 or the like of the rib portion 52). For this reason, by using the formula (1), it is possible to set the lateral width of the rib portion 52, and the like in addition to the thickness of the cover member 51. Thus, it can be also said that the formula (1) represents the dimensional constraints of the cover member 51 and the rib portion 52 in order not to deteriorate the heat dissipation characteristics.

The strength characteristics can be represented using, for example, a deflection amount $\delta$ when a predetermined force P is applied. For example, regarding a structure material having a length L with a certain cross-sectional shape, the deflection amount $\delta$ in the beam structure (cantilever beam structure) in which one end of the structure material is fixed is represented by using the following formula.

$$\delta = PL^3/3EJ \qquad (2)$$

In the formula (2), E represents the longitudinal elastic modulus of structure material, and is, for example, a modulus determined in accordance with the characteristics of the material. J represents the second moment of cross section of the structure material, and is represented using the following formula using the thickness t of the member and the lateral width b of the member in the case of a rectangle.

$$J = (b \times t^3)/12 \qquad (3)$$

For example, because the reference member 60 is formed of a single material, the longitudinal elastic modulus E0 is the longitudinal elastic modulus of the metal material forming the reference member 60. Further, a second moment of cross section J0 of the reference member 60 satisfies the following relationship: J0=(b0×t0³)/12.

In the cover 50 having the hybrid structure, the longitudinal elastic modulus Ec of the entire cover 50 is calculated as the longitudinal elastic modulus of the composite member of the cover member 51 and the rib portion 52. For example, the longitudinal elastic modulus Ec of the composite member can be calculated on the basis of the law of mixture using a longitudinal elastic modulus E1 of the cover member 51 and a longitudinal elastic modulus E2 of the rib portion 52.

In the law of mixture, for example, assumption is made that the deflection amount when a force P is applied to the hybrid structure material (the cover 50) is the same between the metal material (the cover member 51) and the reinforcing material (the rib portion 52). In this case, the longitudinal elastic modulus Ec of the entire cover 50 is represented using the following formula.

$$Ec = (A1 \times E1 + A2 \times E2)/Ac \qquad (4)$$

In the formula (4), A1 represents the cross-sectional area (A1=b1×t1) of the cover member 51 and A2 represents the cross-sectional area (A2=b2xt2) of the rib portion 52. Further, Ac represents the cross-sectional area (Ac=A1+A2) of the entire cover 50.

Further, the second moment of cross section Jc of the entire cover 50 is calculated as the second moment of cross section of the composite member of the cover member 51 and the rib portion 52. For example, the second moment of cross section Jc of the composite member is calculated as follows as the second moment of cross section of the layered beam in which the cover member 51 and the rib portion 52 are stacked.

$$Jc=J1+J2+Jh \qquad (5)$$

In the formula (5), J1 represents the second moment of cross section of the cover member 51 ($J1=(b1×t1^3)/12$), and J2 represents the second moment of cross section of the rib portion 52 ($J2=(b2×t2^3)/12$). Jh represents the second moment by the combined cross section of the cover member 51 and the rib portion 52, and is represented as follows using a distance $h=(t1+t2)/2$ between the centroids of the cover member 51 and the rib portion 52 in the cross section.

$$Jh=(A1×A2)h^3/(A1+A2) \qquad (6)$$

In this embodiment, the deflection amount for the cover 50 shown in the formula (2) is set to be smaller than the deflection amount of the reference member 60. That is, the cover 50 is configured to satisfy the relationship represented by the following formula where Ec represents the longitudinal elastic modulus of the composite member of the cover member 51 and the rib portion 52, Jc represents the second moment of cross section of the composite member, E0 represents the longitudinal elastic modulus of the reference member 60, and J0 represents the second moment of cross section of the reference member 60.

$$Ec×Jc≥E0×J0 \qquad (7)$$

The formula (7) is a conditional expression representing the relationship between the deflection amount of the cover 50 and the deflection amount of the reference member 60 when the predetermined force P is applied. More specifically, in the formula (7), the coefficient $E×C$ included in the denominator of each deflection amount is compared. As shown in the formula (7), the deflection amount of the cover 50 is set to be equal to or less than the deflection amount of the reference member 60. That is, the cover 50 is configured to be displaced by a deflection amount equal to or less than that of the reference member 60 when the predetermined force P is applied.

As described above, Ec is a value according to the physical properties and cross-sectional shapes of the CFRP (the rib portion 52) and the metal material (the cover member 51). Further, Jc is a value according to the cross-sectional shapes of the CFRP and the metal material. Therefore, by using the formula (7), it is possible to set the thickness, lateral width, material, and the like of the rib portion 52 in addition to the thickness of the cover member 51. Thus, it can be also said that the formula (7) represents the dimensional constraints of the cover member 51 and the rib portion 52 in order not to deteriorate the strength characteristics.

In this embodiment, the shapes and materials of the cover member 51 and the rib portion 52 constituting the cover 50 are set so as to satisfy both of the formulae (1) and (7). That is, the parameters (E1, t1, and b1) related to the cover member 51 and the parameters (E2, t2, and b2) related to the rib portion 52 are set on the basis of the parameters (E0, t0, and b0) related to the reference member 60.

Note that the lateral width b1 of the cover member 51 and the lateral width b0 of the reference member are parameters appropriately set to compare the strength and the like of the member, and are typically set so as to satisfy the following relationship: b1=b0. Further, in the case where the same metal material (aluminum material or the like) as the reference member 60 is used for the cover member 51, the following relationship is satisfied: E0=E1. For example, under such a condition, the dimensions of the cover member 51 and the rib portion 52, and the like are appropriately set.

The dimension and material of the reference member 60 are appropriately set in accordance with, for example, the characteristics of the in-wheel motor drive device 100. For example, the thickness t0 and the like of the reference member 60 are appropriately set depending on the output value (watt) of the motor, the required tire size (diameter or the like), the durability load or the like to be set. The cover 50 of a hybrid structure is formed on the basis of the formulae (1) and (7) with reference to this set value. For example, such a design is possible.

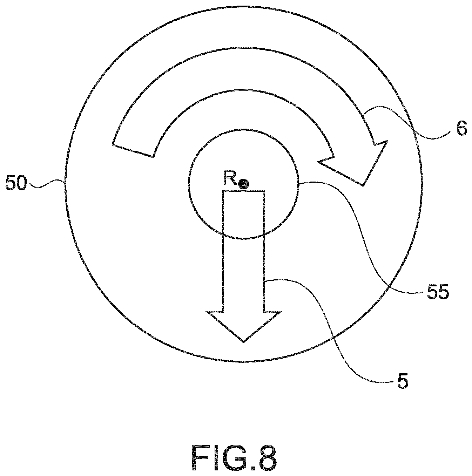

Fig. 8 is a schematic diagram showing a direction of an external force applied to the cover 50. Fig. 8 schematically illustrates the direction of an external force 5 applied to the cover 50 (the first cover 50a and the second cover 50b) and a rotational direction 6 of the cover 50. Note that in Fig. 8, illustration of the rib portion 52 is omitted.

As described with reference to Fig. 3 or the like, the cover 50 is a structure of a part of the wheel, and functions as a strength member for supporting the wheel 40 (the tire 2) against the motor 10 or the like. For example, a load corresponding to the weight of the kick skater 500 and the weight of the user is applied to the fixed shafts 1a and 1b. This load is transmitted to the wheel 40 and the tire 2 through the cover 50 and becomes the external force 5 to be applied to the cover 50. For example, the disposition and the like of the rib portion 52 are designed with the external force 5 due to the assumed load as a force to be mainly applied.

The direction in which the load is applied (the direction of the external force 5) is the vertically downward direction, and is, for example, the radial direction about the rotation center axis R. Therefore, in the cover 50, a vertically downward load is applied from the through hole 55 toward the outer periphery of the cover 50 as shown in Fig. 8. Further, the cover 50 is caused to rotate in a predetermined rotational direction 6 about the rotation center axis R. Therefore, the load along the radial direction will be sequentially applied to the cover 50 over the entire circumference.

For this reason, it is favorable to form the reinforcing structure of a CFRP (the rib portion 52) so as to run radially from the center. For example, as shown in Fig. 4, by forming the rib portion 52 radially about the rotation center axis R, it is possible to sufficiently reinforce the direction in which the external force 5 associated with the load is applied. As a result, it is possible to form the cover 50 having excellent mechanical strength and sufficient heat dissipation characteristics. As a result, it is possible to realize a lightweight and highly reliable in-wheel motor drive device 100.

Further, in the case where the kick skater 500 runs inclined, performs a curve operation or the like, or performs a braking operation, the external force 5 other than a load may be applied. The cover 50 is designed so as to be capable of properly supporting the wheel 40 and the like even in the case where these external forces 5 are applied, for example.

For example, as shown in Fig. 5, it is possible to realize reinforcement against the additional external force 5 to be applied other than the load by using the concentrically disposed rib portion 52 in addition to the radially disposed rib portion 52. As a result, it is possible to sufficiently avoid such a situation that the cover 50 is distorted with the curve or braking operation. As a result, it is possible to realize a lightweight in-wheel motor drive device 100 that exhibits excellent strength performance.

As described above, in the in-wheel motor drive device 100 according to this embodiment, a rotational force from the motor 10 is transmitted and the wheel 40 rotates. The cover member 51 of the cover 50 is connected to the wheel 40 to form a space that houses the motor 10. The cover member 51 is reinforced by the rib portion 52 formed of a material different from that of the cover member 51. This makes it possible to, for example, suppress the thickness of the cover member 51 while reinforcing the cover member 51 and realize a lightweight and highly reliable drive device.

In recent years, the electrification of a drive device and the like has been attracting attention with an environmental response, and there is a tendency that miniaturization and higher output of a motor, an in-wheel motor, and the like are desired. It is conceivable that the heat generation temperature of the motor rises as the miniaturization and higher output advance. The temperature rise of the motor is due to the winding coil of the motor as a heat generating source, and a problem such as the coating of the coil is damaged when the coil temperature exceeds 150 ° may occur, for example. For this reason, it is desired to reduce the coil temperature to 150 ° or less including the use environment, and a configuration that easily radiates heat generated by the motor to the outside is required.

It is conceivable to form a cover of an in-wheel motor or the like with a single material. For example, in the case where the cover is formed of only a metal material, the plate thickness increases to ensure the strength, and the weight of the device may increase. Further, since the plate thickness increases, there is a possibility that the heat dissipation characteristics are reduced. Further, for example, it is conceivable to form a cover by using only a material such as a strong and lightweight CFRP. However, a non-metal material such as a CFRP is generally a less thermally conductive material. For this reason, in the case of covering the functional component that generates heat such as an in-wheel motor, there is a possibility that the heat cannot be properly radiated by the cover using only a CFRP.

In this embodiment, the cover member 51 is reinforced by the rib portion 52 formed of a material different from that of the cover member 51. A metal material such as an aluminum material is used for the cover member 51, and a fiber reinforced material such as a CFRP is used for the rib portion 52. By adopting such a hybrid structure of a metal material and a fiber reinforced material, it is possible to form a lightweight cover 50 with high strength and high thermal conductivity.

For example, by using a reinforcing structure by the rib portion 52, it is possible to reduce the thickness (plate thickness) of the cover member 51m and suppress the weight of the metal material used for the cover member 51. Further, by reducing the thickness of the cover member 51, it is possible to greatly improve the heat dissipation characteristics from the inside to the outside of the motor 10. As a result, it is possible to sufficiently avoid damage or the like of the coil coating due to heat generation in the motor coil or the like, and realize a highly reliable drive device.

Note that as shown in the formula (3) or the like, the strength of the cover member 51 decreases in proportion to the third power of the plate thickness. This decreased strength is reinforced by the rib portion 52. For example, in the case where the rib portion 52 is formed of the same material as the cover member 51, it is conceivable that the effect of improving the strengths and the effect of reducing the weight are small.

In this embodiment, it is reinforced by a lightweight and high-strength CFRP material (the rib portion 52). Thus, by using a strong CFRP material that is another component as the rib portion 52 for reinforcement, it is possible to improve the strength with a small usage amount. Further, since the CFRP material has also a small specific gravity, it is possible to exhibit a sufficient weight reduction effect. Thus, it is possible to realize a highly reliable drive device capable of sufficiently suppressing the deformation or the like due to the load while suppressing the device weight.

By using the rib portion 52 formed of a CFRP as a reinforcing material as described above, it is possible to not only reduce the weight but also reduce the thermal resistance. It can be said that such a hybrid structure of a metal material and a fiber reinforced material is a particularly useful structure in regions of heat-generating components (components requiring heat dissipation) where strength is also required.

Further, the shape and material of the cover 50 (the cover member 51 and the rib portion 52) are set on the basis of the formulae (1) and (7). That is, the cover member 51 and the rib portion 52 are designed with reference to the heat radiation characteristics and the strength characteristics of the reference member 60. As a result, it is possible to easily set the heat dissipation characteristics and strength characteristics required for the cover 50, and easily form highly reliable and lightweight housing cover and the like.

<Other embodiments>

The present technology is not limited to the embodiments described above, and can achieve various other embodiments.

In the above-mentioned embodiment, as shown in Fig. 4, Fig. 5, and the like, a hybrid structure in which the rib portion 52 is disposed inside of the cover member 51 (on the inner surface 53a and the inner surface 53b) has been used. The present technology is not limited thereto. For example, the rib portion 52 may be disposed outside the cover member 51 (on the outer surface 54a and the outer surface 54b). Even in the case where the rib portion 52 is provided outside the cover member 51, it is possible to sufficiently reinforce the cover member 51.

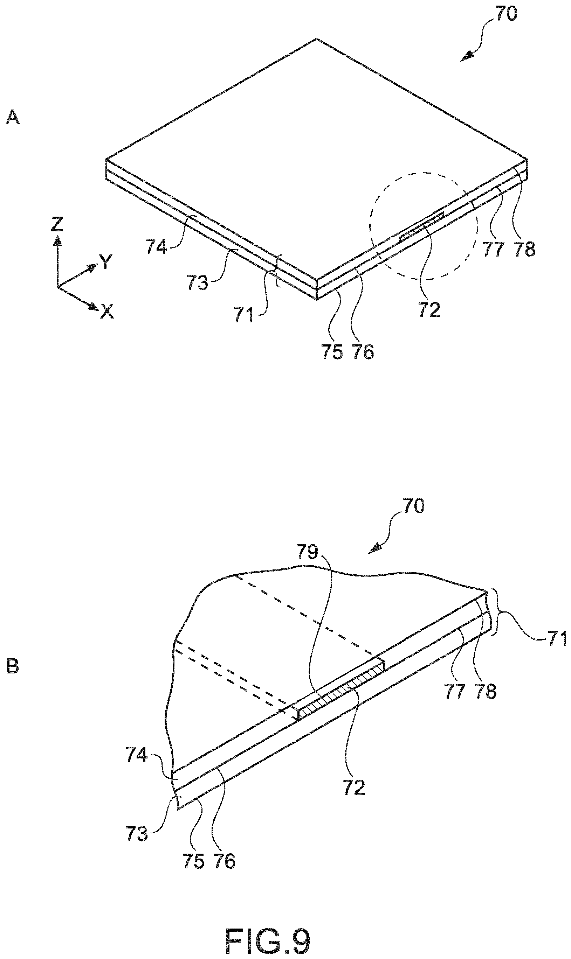

Further, the present technology is not limited to the case of providing the rib portion 52 on one surface of the cover member 51, and the rib portion 52 may be provided inside the cover member 51. Fig. 9 is a schematic diagram showing an example of a hybrid structure according to another embodiment. Part A of Fig. 9 is a perspective view showing an overview of the hybrid structure. Part B of Fig. 9 is an enlarged view in which the range indicated by the dotted line in Part A of Fig. 9 is enlarged. Part A of Fig. 9 and Part B of Fig. 9 schematically illustrate a hybrid structure for a cover 70 including a cover member 71 and a rib portion 72, which are formed of materials different from each other.

As shown in Part A of Fig. 9, the cover member 71 includes a first flat plate member 73 and a second flat plate member 74. The first and second flat plate members 73 and 74 each have a substantially flat plate shape, and are formed of a metal material such as an aluminum material. Note that Part A of Fig. 9 illustrates a structure in the case where a part of each flat plate member (the cover 70) is cut into a rectangular parallelepiped shape. In practice, each flat plate member is appropriately formed in a substantially disc shape having a through hole, a screw hole, or the like (see Fig. 3 or the like).

The first flat plate member 73 has a first surface 75 and a second surface 76 opposed to the first surface 75. The first flat plate member 73 is disposed such that the first surface 75 (the second surface 76) is perpendicular to the rotation center axis R. In this embodiment, the first flat plate member 73 corresponds to a first flat plate portion perpendicular to the predetermined axis.

The second flat plate member 74 has a third surface 77 and a fourth surface 78 opposed to the third surface 77. The second flat plate member 74 connects the third surface 77 to the second surface 76 and comes into contact with the first flat plate member 73 so as to cover the first flat plate member 73. Further, as shown in Part B of Fig. 9, a groove portion 79 extending in one direction is formed on the third surface 77 (the side coming into contact with the first flat plate member 73). In this embodiment, the second flat plate member 74 corresponds to the second flat plate portion.

The cover 70 is connected to the wheel 40 with the second flat plate member 74 (fourth surface 78) facing the motor 10. Note that the cover 70 may be configured so that the first flat plate member 73 (first surface 75) is disposed facing the motor 10.

The rib portion 72 is formed of a fiber reinforced material such as a CFRP and disposed between the first flat plate member 73 and the second flat plate member 74. For example, the rib portion 72 is formed on the second surface 76 so as to fit in the groove portion 79 provided on the third surface 77. Note that grooves may be provided in both the second surface 76 and the third surface 77, and the rib portion 72 may be formed therebetween. In this manner, the cover 70 has a sandwich structure in which the rib portion 72 is sandwiched between the first flat plate member 73 and the second flat plate member 74.

As a method of forming the rib portion 72, for example, a heat fusion method in which a CFRP material before a curing reaction is sandwiched with a metal (the first and second flat plate members 73 and 74) and then heat is applied to bond the CFRP material to the metal is used. At this time, by heating the CFRP material at a predetermined temperature, the CFRP material can be thermally cured at the same time as fusing. Further, the flat plate members are screwed to the wheel 40 while being in contact with each other via the rib portion 72. Note that the flat plate members may be brought into contact with each other using a conductive adhesive or the like.

The specific configuration of the rib portion 72 and the groove portion 79 is not limited. For example, the shape of the rib portion 72 (the groove portion 79) may be appropriately set so that the desired strength can be realized. For example, the rib portion 72 may be disposed radially or concentrically as described with reference to Fig. 4, Fig. 5, and the like.

By adopting the sandwich structure as described above, it is possible to, for example, increase the exposed area of the metal surface (the first flat plate member 73 or the second flat plate member 74) with respect to the motor 10. As a result, it is possible to reduce the thermal resistance of the cover 70. Thus, it can be also said that the sandwich structure shown in Fig. 9 is a structure that improves the thermal conductivity (suppress the thermal resistance) and is a structure suitable for heat dissipation.

Further, in the sandwich structure, it is possible to improve the strength by decreasing the height of the CFRP and increasing the lateral width. As a result, for example, it is possible to realize a lightweight cover 70 having high mechanical strength while maintaining the heat dissipation characteristics even in the case where there is a constraint in the thickness direction.

In the above, the thickness of the cover member has been set to be smaller than the thickness of the reference member (see Fig. 7). The present technology is not limited thereto. For example, the thickness of the cover member may be set to be similar to that of the reference member. Even in such a case, it is possible to sufficiently improve the strength of the cover member can by providing a rib portion or the like. This makes it possible to form a sufficiently lightweight reinforcing structure compared to, for example, the case of increasing the thickness of the cover member. As a result, for example, it is possible to easily improve the durability load of the kick skater.

The configuration of the in-wheel motor drive device 100 shown in Fig. 2 to Fig. 9 is merely one embodiment, and another arbitrary configuration may be adopted for the whole shape and the respective portions without departing from the essence of the present technology. For example, the number of gears included in the gear mechanism, the number of teeth, the outer diameter, the deceleration ratio, and the like may be arbitrarily determined, and a configuration other than the planetary gear mechanism may be adopted. An arbitrary gear mechanism capable of decelerating and transferring a rotational force generated by a generation unit may be configured as the gear unit.

Also the configuration of the motor is not limited, and, for example, an outer rotor type motor or the like may be adopted. For example, a gear is directly attached to the rotor included in the outer rotor type motor, and the rotational force of the rotor may be decelerated and transmitted by the gear mechanism. That is, a configuration in which no rotational shaft is used can be adopted. Note that a device other than the motor may be used as the generation unit that generates a rotational force.

Further, in the above, the motor, the gear mechanism, the housing, the wheel, the tire, and the like are configured coaxially with reference to the rotation center axis. The present technology is not limited thereto, and another arbitrary configuration may be adopted. Note that by configuring the respective portions coaxially, it is advantageous for miniaturization of the device.

Also the configuration of the wheel unit may be designed arbitrarily. For example, spokes or the like are provided on the outer peripheral surface of the wheel, and a tire supporting portion centering on the rotation center axis is configured at the distal end thereof. A tire may be connected to the tire supporting portion. That is, the present technology is applicable also to a drive wheel that uses spokes or the like and has a large diameter.

Further, in the above, the wheel and the first and second covers constituting the housing have integrally rotated. The present invention is not limited thereto. The wheel may be rotatably connected to the first and second covers, and only the wheel may rotate. Even in this case, the first and second covers function as strength members for supporting the wheel. For this reason, by providing a reinforcing structure by a rib portion or the like, it is possible to form a lightweight and highly reliable cover.

In the above, the kick skater has been described as a moving object as an example. The type and the like of the moving object are not limited, and the present technology is applicable to an arbitrary moving object including a drive wheel. For example, by applying the present technology to transport vehicles that carry cargo in warehouses, it is possible to realize the weight reduction of the device as well as high output for improving the loading amount, the moving speed, and the like. Other examples of the moving object include automobiles, electric cars, hybrid electric vehicles, motorcycles, bicycles, personal mobility, autonomous mobile robots, construction machinery, and agricultural machinery (tractors).

At least 2 features of the above-mentioned features according to the present technology may be combined. In other words, various features described in the respective embodiments may be combined discretionarily regardless of the embodiments. Further, the various effects described above are not limitative but are merely illustrative, and other effects may be provided.

It should be noted that the present technology may also take the following configurations.

(1) A drive device, including:

a generation unit that generates a rotational force;
a wheel unit that rotates about a predetermined axis, the generated rotational force being transmitted to the wheel unit; and
a cover unit that includes a base portion connected to the wheel unit, and a rib portion that is formed of a material different from that of the base portion and reinforces the base portion, and forms a space that houses the generation unit.

(2) The drive device according to (1), in which the base portion rotatably supports the wheel unit relative to the generation unit.

(3) The drive device according to (1) or (2), in which the cover unit includes a pair of the base portions connected to one side and the other side of the wheel unit with the generation unit sandwiched therebetween along the predetermined axis.

(4) The drive device according to any one of (1) to (3), in which

the generation unit generates a rotational force about the predetermined axis.

(5) The drive device according to any one of (1) to (4), in which
the rib portion is formed of a material having a longitudinal elastic modulus higher than that of the material of the base portion.

(6) The drive device according to any one of (1) to (5), in which
the rib portion is formed of a material having a specific gravity lower than that of the material of the base portion.

(7) The drive device according to any one of (1) to (6), in which
the base portion is formed of a metal material, and the rib portion is formed of a fiber reinforced material.

(8) The drive device according to any one of (1) to (7), in which
the base portion has a disposition surface perpendicular to the predetermined axis, the rib portion being disposed on the disposition surface.

(9) The drive device according to (8), in which
the rib portion is disposed on the disposition surface along a radial direction centered on the predetermined axis.

(10) The drive device according to (9), in which
the rib portion is disposed radially about the predetermined axis.

(11) The drive device according to any one of (8) to (10), in which
the rib portion is disposed on the disposition surface along a circumferential direction centered on the predetermined axis.

(12) The drive device according to (11), in which
the rib portion is concentrically disposed about the predetermined axis.

(13) The drive device according to any one of (1) to (12), in which
the cover unit is configured with reference to a shape and a material of a reference member that is capable of rotatably supporting the wheel unit relative to the generation unit without using reinforcement by the rib portion, the reference member having predetermined heat dissipation characteristics.

(14) The drive device according to (13), in which
a thickness of the base portion is set smaller than a thickness of the reference member.

(15) The drive device according to (13) or (14), in which
the cover unit is configured to satisfy the following relationship:

$$t/S \leq t0/S0$$

where t represents a thickness of the base portion, S represents an exposed area of the base portion to the generation unit, t0 represents a thickness of the reference member, and S0 represents an exposed area of the reference member to the generation unit.

(16) The drive device according to any one of (13) to (15), in which
the cover unit is configured to satisfy the relationship:

$$Ec \times Jc \geq E0 \times J0$$

where Ec represents a longitudinal elastic modulus of a composite member of the base portion and the rib portion, Jc represents a second moment of cross section of the composite member, E0 represents a longitudinal elastic modulus of the reference member, and J0 represents a second moment of cross section of the reference member.

(17) The drive device according to any one of (1) to (16), in which
the base portion has a flat plate shape that is perpendicular to the predetermined axis and has an inner surface and an outer surface, the inner surface facing the generation unit, the outer surface being opposite to the inner surface, and
the rib portion is disposed on at least one of the inner surface or the outer surface.

(18) The drive device according to any one of (1) to (17), in which
the base portion includes a first flat plate portion perpendicular to the predetermined axis and a second flat plate portion that comes into contact with the first flat plate portion so as to cover the first flat plate portion, and
the rib portion is disposed between the first flat plate portion and the second flat plate portion.

(19) The drive device according to any one of (1) to (18), in which
the rib portion is configured by either adhesion to the base portion or injection molding.

(20) A moving object, including:

a generation unit that generates a rotational force;
a wheel unit that rotates about a predetermined axis, the generated rotational force being transmitted to the wheel unit;
a cover unit that includes a base portion connected to the wheel unit, and a rib portion that is formed of a material different from that of the base portion and reinforces the base portion, and forms a space that houses the generation unit; and
a control unit that controls the rotational force generated by the generation unit.

Reference Signs List

| R | rotation center axis |
|---|---|
| 1a, 1b | fixed shaft |
| 2 | tire |
| 3 | housing |
| 10 | motor |
| 14 | motor housing |
| 40 | wheel |
| 50, | 70 cover |
| 50a | first cover |
| 50b | second cover |
| 51, 51a, 51b, 71 | cover member |
| 52, 52a, 52b, 72 | rib portion |
| 53a, | 53b inner surface |
| 54a, | 54b outer surface |
| 56 | disposition surface |
| 60 | reference member |
| 73 | first flat plate member |
| 74 | second flat plate member |
| 100 | in-wheel motor drive device |
| 500 | kick skater |
| 520 | controller |

**Claims**

1. A drive device, comprising:

   a generation unit that generates a rotational force;
   a wheel unit that rotates about a predetermined axis, the generated rotational force being transmitted to the wheel unit; and
   a cover unit that includes a base portion connected to the wheel unit, and a rib portion that is formed of a material different from that of the base portion and reinforces the base portion, and forms a space that houses the generation unit.

2. The drive device according to claim 1, wherein the base portion rotatably supports the wheel unit relative to the generation unit.

3. The drive device according to claim 1, wherein the cover unit includes a pair of the base portions connected to one side and the other side of the wheel unit with the generation unit sandwiched therebetween along the predetermined axis.

4. The drive device according to claim 1, wherein the generation unit generates a rotational force about the predetermined axis.

5. The drive device according to claim 1, wherein the rib portion is formed of a material having a longitudinal elastic modulus higher than that of the material of the base portion.

6. The drive device according to claim 1, wherein the rib portion is formed of a material having a specific gravity lower than that of the material of the base portion.

7. The drive device according to claim 1, wherein the base portion is formed of a metal material, and the rib portion is formed of a fiber reinforced material.

8. The drive device according to claim 1, wherein the base portion has a disposition surface perpendicular to the predetermined axis, the rib portion being disposed on the disposition surface.

9. The drive device according to claim 8, wherein the rib portion is disposed on the disposition surface along a radial direction centered on the predetermined axis.

10. The drive device according to claim 9, wherein the rib portion is disposed radially about the predetermined axis.

11. The drive device according to claim 8, wherein the rib portion is disposed on the disposition surface along a circumferential direction centered on the predetermined axis.

12. The drive device according to claim 11, wherein the rib portion is concentrically disposed about the predetermined axis.

13. The drive device according to claim 1, wherein the cover unit is configured with reference to a shape and a material of a reference member that is capable of rotatably supporting the wheel unit relative to the generation unit without using reinforcement by the rib portion, the reference member having predetermined heat dissipation characteristics.

14. The drive device according to claim 13, wherein a thickness of the base portion is set smaller than a thickness of the reference member.

15. The drive device according to claim 13, wherein the cover unit is configured to satisfy the following relationship:

$$t/S \leq t0/S0$$

where t represents a thickness of the base portion, S represents an exposed area of the base portion to the generation unit, t0 represents a thickness of the reference member, and SO represents an exposed area of the reference member to the generation unit.

16. The drive device according to claim 13, wherein the cover unit is configured to satisfy the relationship:

$$Ec \times Jc \geq E0 \times J0$$

where Ec represents a longitudinal elastic modulus of a composite member of the base portion and the rib portion, Jc represents a second moment of cross section of the composite member, E0 represents a longitudinal elastic modulus of the reference member, and J0 represents a second moment of cross section of the reference member.

17. The drive device according to claim 1, wherein the base portion has a flat plate shape that is perpendicular to the predetermined axis and has an inner surface and an outer surface, the inner surface facing the generation unit, the outer surface being opposite to the inner surface, and the rib portion is disposed on at least one of the inner surface or the outer surface.

18. The drive device according to claim 1, wherein the base portion includes a first flat plate portion perpendicular to the predetermined axis and a second flat plate portion that comes into contact with the first flat plate portion so as to cover the first flat plate portion, and the rib portion is disposed between the first flat plate portion and the second flat plate portion.

19. The drive device according to claim 1, wherein the rib portion is configured by either adhesion to the base portion or injection molding.

20. A moving object, comprising:

a generation unit that generates a rotational force;
a wheel unit that rotates about a predetermined axis, the generated rotational force being transmitted to the wheel unit;
a cover unit that includes a base portion connected to the wheel unit, and a rib portion that is formed of a material different from that of the base portion and reinforces the base portion, and forms a space that houses the generation unit; and
a control unit that controls the rotational force generated by the generation unit.

FIG.1

First side

R

1a

Second side

1b

4a

4b

2

100

3

FIG.2

FIG.3

FIG.4

FIG.5

FIG.6

FIG.7

FIG.8

FIG.9

## INTERNATIONAL SEARCH REPORT

| International application No. |
| --- |
| PCT/JP2019/013202 |

### A. CLASSIFICATION OF SUBJECT MATTER
Int. Cl. B60K7/00(2006.01)i, B60B7/04(2006.01)i, B62K17/00(2006.01)i,
B62M7/12(2006.01)i, H02K5/04(2006.01)i, A63C17/12(2006.01)n

According to International Patent Classification (IPC) or to both national classification and IPC

### B. FIELDS SEARCHED

Minimum documentation searched (classification system followed by classification symbols)
Int. Cl. B60K7/00, B60B7/04, B62K17/00, B62M7/12, B62M6/60, H02K5/04,
A63C17/12

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | CN 201821182 U (CHEN, Quanfeng) 04 May 2011, | 1-5, 8-20 |
| A | paragraphs [0002], [0011]-[0013], fig. 1, 2 (Family: none) | 6-7 |
| Y | JP 2011-240772 A (NTN CORP.) 01 December 2011, | 1-5, 8-20 |
| A | paragraphs [0014], [0060] & US 2013/00057117 A1, paragraphs [0014], [0071] & WO 2011/145502 A1 & EP 2572917 A1 & CN 102905922 A | 6-7 |
| Y | JP 2016-49916 A (NTN CORP.) 11 April 2016, paragraphs [0060]-[0065], fig. 5-8 (Family: none) | 11-12 |
| Y | JP 10-178761 A (SONY CORP.) 30 June 1998, paragraphs [0029]-[0041], fig. 16-21 (Family: none) | 18 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 12.06.2019 | 25.06.2019 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016037061 A